# EUROPÄISCHE PATENTSCHRIFT

(11) **EP 1 303 694 B1**
(45) Veröffentlichungstag und Bekanntmachung des Hinweises auf die Patenterteilung: **17.11.2004**
(21) Anmeldenummer: 01957931.7
(22) Anmeldetag: 07.07.2001
(51) Int. Cl.: F02M 35/024, B01D 46/52

(54) **LUFTFILTER, INSBESONDERE FÜR DIE ANSAUGLUFT EINER BRENNKRAFTMASCHINE**
AIR FILTER, IN PARTICULAR, FOR THE INDUCTION AIR OF AN INTERNAL COMBUSTION ENGINE
FILTRE A AIR, NOTAMMENT POUR L'AIR D'ADMISSION D'UN MOTEUR A COMBUSTION INTERNE

(30) Priorität: 27.07.2000 DE 10036593
(43) Veröffentlichungstag der Anmeldung: 23.04.2003
(73) Patentinhaber: Mann + Hummel GmbH, 71638 Ludwigsburg (DE)
(72) Erfinder: RIEGER, Mario, 71691 Freiberg (DE); AMANN, Matthias, 71686 Remseck (DE)
(74) Vertreter: Voth, Gerhard
(86) Internationale Anmeldenummer: PCT/EP2001/007812
(87) Internationale Veröffentlichungsnummer: WO 2002/010575

(56) Entgegenhaltungen:
- DE-A- 3 916 544
- US-A- 2 135 750
- US-A- 5 277 157
- US-A- 5 730 768
- PATENT ABSTRACTS OF JAPAN vol. 1998, no. 02, 30. Januar 1998 (1998-01-30) & JP 09 264208 A (TENETSUKUSU:KK), 7. Oktober 1997 (1997-10-07)

## Beschreibung

### Stand der Technik

Die Erfindung betrifft ein Luftfilter, insbesondere für die Ansaugluft einer Brennkraftmaschine nach dem Oberbegriff des unabhängigen Anspruchs 1. Solche Luftfilter sind allgemein bekannt. Diese sind im Motorraum eines Fahrzeugs angeordnet, das Gehäuse besteht üblicherweise aus einem thermoplastischen Kunststoff. In diesem Gehäuse ist eine Dichtfläche vorgesehen, auf diese Dichtfläche wird ein Filtereinsatz aufgelegt und das Gehäuse mit dem Einsatz über einen Kunststoffdeckel verschlossen. Die Verbindung zwischen dem Gehäuse und dem Deckel erfolgt üblicherweise mit entsprechenden Schnapp- oder Rastmitteln.

Aus der DE 196 38 790.6 ist ein Luftfilter für eine Brennkraftmaschine bekannt. Der Filtereinsatz wird über einen Rahmen zwischen Gehäuseober- und Gehäuseunterteil eingeschoben. Durch eine Schwenkbewegung erfolgt das Verschließen der beiden Gehäuseteile und das Abdichten der Reinluftseite des Luftfilters von der Rohluftseite. Die Befestigung des Filterträgers erfolgt auch hier mit geeigneten Befestigungsmitteln wie Schnapp-, Rast- oder Schraubelementen. Als weiterer Stand der Technik sei das Dokument US 5,730,768 erwähnt.

Ein Nachteil des Standes der Technik ist darin zu sehen, dass das Verschließen oder Öffnen eines Schnapp- oder Rasthakens an schwer zugänglichen Stellen unmöglich ist.

Der Erfindung liegt daher die Aufgabe zugrunde, einen Luftfilter zu schaffen, welcher die genannten Nachteile vermeidet und welcher auch unter beengten Einbauverhältnissen zuverlässig geöffnet bzw. geschlossen werden kann.

Diese Aufgabe wird ausgehend von dem Oberbegriff des unabhängigen Anspruchs 1 durch dessen kennzeichnenden Merkmale gelöst.

Der wesentliche Vorteil der Erfindung ist darin zu sehen, dass der Deckel beim Öffnen bzw. Schließen längs einer Führungsschiene gleitet und damit besonders an schwer zugänglichen Stellen ein Lagerelement für den Deckel an dem Gehäuse geschaffen werden kann.

Gemäß einer Weiterbildung der Erfindung ist die bogenförmige Führungsschiene an dem Deckel und das Gegenstück an dem Gehäuse angeordnet. Selbstverständlich besteht auch die Möglichkeit, die Führungsschiene an dem Gehäuse und das Gegenstück an dem Deckel anzuordnen.

Eine Weiterbildung der Erfindung sieht vor, die bogenförmige Führungsschiene mit Gleitflächen zu versehen. Das Gegenstück kann gemäß einer weiteren Ausgestaltung der Erfindung zapfenartig gestaltet sein. dieses Gegenstück steht mit der bogenförmigen Führungsschiene in Kontakt und läßt den Deckel in die gewünschte Position gleiten.

Eine Weiterbildung der Erfindung sieht vor, zusätzliche Befestigungselemente an dem Deckel bzw. zwischen Deckel und Gehäuse vorzusehen.

In einer bevorzugten Ausbildungsform ist eine Längsseite des Deckels über die bogenförmige Führungsschiene an dem Gehäuse gelagert. Die gegenüberliegende Längsseite weist Schraub-, Schnapp- oder Rastverbindungen auf, damit wird der Deckel an einer schwer zugänglichen Stelle über die bogenförmige Führungsschiene gehalten, an der leicht zugänglichen Stelle über entsprechende andere manuell zu betätigende Befestigungsmittel.

Gemäß einer Ausgestaltung des Filtereinsatzes hinsichtlich des verwendeten Filterelements besteht dieses aus einem Plattenfilter, welcher eine umlaufende Dichtung aufweist. Diese Dichtung dient gleichzeitig als Abdichtung zwischen Rohluft- und Reinluftseite.

In einer besonders vorteilhaften Ausgestaltung der Erfindung verlaufen an dem Gehäuse bogenförmige Führungsschienen parallel zueinander. Passgenau zwischen den Führungsschienen ist das Gegenstück des Deckels vorgesehen, welches zwischen den Führungsschienen entlang gleitet. Die Führungsschienen können auch als bogenförmig verlaufende Bohrung gestaltet sein, wobei in diesem Fall der Deckel einen bogenförmigen Stift aufweist, der in der Bohrung entlang gleitet. Selbstverständlich besteht auch die Möglichkeit, mehrere solche Führungssysteme an dem Luftfilter vorzusehen. Zweckmäßigerweise sind bei dem Luftfilter, welcher im wesentlichen rechteckförmig ausgestaltet ist, zwei Führungsssteme angeordnet. Der Vorteil der präzisen bogenförmigen Führung liegt darin, dass damit gewährleistet wird, dass die Dichtung zwischen Deckel und Gehäuse zuverlässig wirkt und die Deckelführung dafür sorgt, dass das Ansaugen von Falschluft an der Kontaktstelle zwischen Deckel und Gehäuse vermieden wird.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den schematischen Aufbau eines Filtergehäuses
- Figur 2: die Detaillösung einer Deckelführung
- Figur 3: eine weitere Detaillösung einer Deckelführung
- Figur 4: ein Filtergehäuse mit integriertem Filterelement
- Figur 4a: die Außenansicht eines Luftfilters mit Deckel und Gehäuse.

### Beschreibung der Ausführungsbeispiele

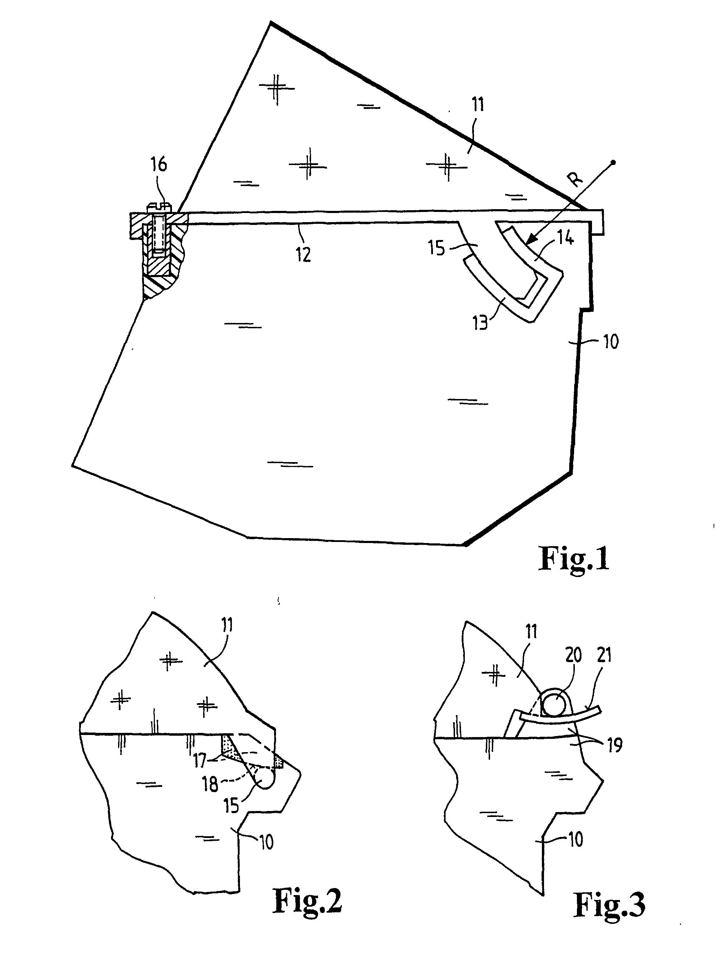

Die schematische Darstellung gemäß Figur 1 zeigt ein Filtergehäuse 10 welches üblicherweise ein rechteckförmiger Behälter zur Aufnahme des Filterelements ist. Auf diesem Filtergehäuse 10 ist ein Deckel 11 angeordnet. Der Deckel schließt entlang der Verbindungsfläche 12 das Gehäuse 10 ab. Zwischen Gehäuse 10 und Deckel 11 ist ein hier nicht dargestelltes Filterelement innerhalb des Gehäuses eingespannt. An der rechten Seite des Gehäuses 10 sind zwei bogenförmige Führungsschienen 13, 14 vorgesehen. In diese Führungsschienen greift ein an dem Deckel 11 angeordnetes Gegenstück 15 ein. Das Gegenstück 15 ist spielfrei zwischen den beiden Führungsschienen gelagert, so daß ein erstes Lager für den Deckel 11 entsteht. Auf der gegenüberliegenden, hier nicht sichtbaren Seite des Gehäuses 10, sind ebenfalls Führungsschienen vorgesehen. Auch dort greift ein Gegenstück des Deckels in die Führungsschienen ein. Diese zwei Lagereinrichtungen definieren die Position des Deckels 11 in der hier gezeigten Geschlossenstellung. Zusätzlich zu dieser Führung ist an der linksseitigen Abschlußwand von Deckel 11 und Gehäuse 10 wenigstens eine Schraubverbindung 16 vorgesehen. Diese Schraubverbindung ist in üblicher Weise aufgebaut, da es sich bei dem Material des Gehäuses 10 um Kunststoff handelt, sind auch selbstschneidende Schrauben für die Befestigung denkbar.

Figur 2 zeigt die schematische Darstellung einer Variante. Gleiche Teile sind mit gleichen Bezugszeichen versehen. An dem Gehäuse 10 befindet sich auf der hier gezeigten rechten Lagerseite ein Lagerböckchen 17. Der Deckel 11 ist auch hier mit einem Gegenstück 15 versehen. Beim Aufsetzten des Deckels 11 auf das Gehäuse 10 greift das Gegenstück unter das Lagerböckchen 17 bzw. gleitet beim Öffnen des Deckels und beim Verschließen des Deckels an der Gleitfläche 18 des Lagerböckchens 17 entlang. In Verbindung mit einer hier nicht dargestellten, auf der gegenüberliegenden Seite, angeordneten Schraubverbindung ist eine zuverlässige Befestigung des Deckels 11 auf dem Gehäuse durch diese Verbindungstechnik gewährleistet.

Beim Schließen der Bogenführung wird die Dichtung des Filterelements verspannt. In geschlossenem Zustand sind Gehäuse und Deckel spielfrei miteinander verbunden. Zur Aufnahme der Verspannung wirkt die Bogenführung federnd, dass heißt toleranzausgleichend. Alternativ zu den hier dargestellten Beispielen kann das Gegenstück auch als federndes Metallelement aufgeführt sein. Dieses hat den Vorteil, dass eine zusätzliche Federkraft erzeugt werden kann und damit ein erhöhte Haltekraft auf die Dichtung ausgeübt wird.

Figur 3 zeigt eine weitere Variante einer Befestigung. An dem Gehäuse 10 ist ein sich nach oben erstreckender Lagerträger 19 vorgesehen. An diesem befindet sich ein Lagerstift 20 oder ähnliches. An dem Deckel 11 ist eine Gleitfläche 21 ausgebildet, die sich unter den Lagerstift 20 schiebt und auch hier für eine zuverlässige Verbindung zwischen Deckel 11 und Gehäuse 10 sorgt.

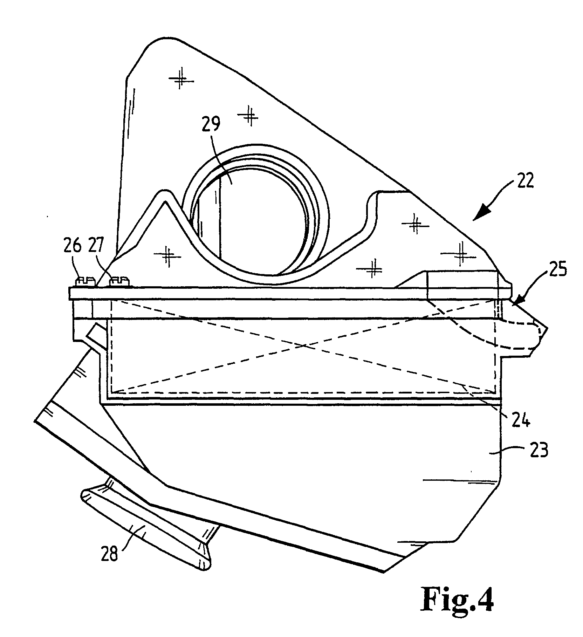

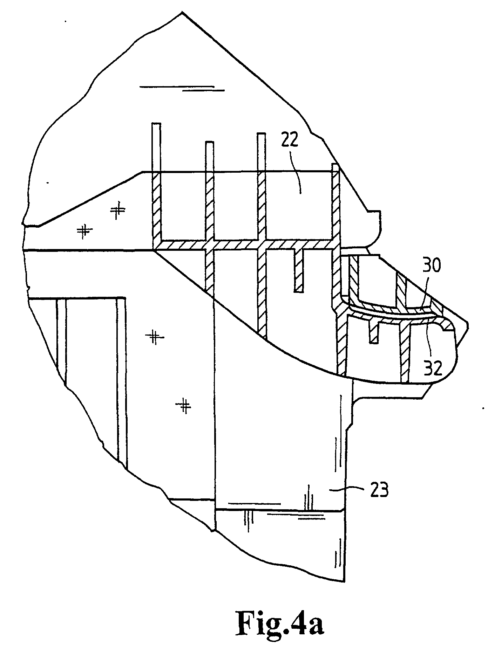

Figur 4 zeigt die Außenansicht eines Luftfilters mit einem Deckel 22 und einem Gehäuse 23. In dem Gehäuse 23 ist ein Filterelement 24 vorgesehen. Das Filterelement ist an dem Verbindungsbereich 25 zwischen Deckel 22 und Gehäuse 23 im Gehäuse befestigt. Durch das Aufsetzen des Deckels 22 auf das Gehäuse erfolgt sowohl eine Abdichtung zwischen der Rohluftseite im Gehäuse 23 und der Reinluftseite im Deckel 22, als auch eine Abdichtung des gesamten Gehäuses nach außen. Auf der rechten Seite des Filters ist eine ähnlich wie in Figur 1 dargestellte Befestigung vorgesehen. Auf der linken Seite befinden sich Schraubverbindungen 26, 27. Über die Öffnung 28 wird dem Filter Rohluft zugeführt. Diese Luft wird durch das Filterelement 24 gereinigt. Die Reinluft strömt über die Öffnung 29 zu einer hier nicht dargestellten Ansaugleitung der Brennkraftmaschine.

Die Detaildarstellung der rechtsseitigen Befestigung, dass heißt der Befestigung über bogenförmige Führungsschienen, zeigt Figur 4a. An dem Gehäuse 23 ist eine Führungsschiene 30 vorgesehen. An dieser Führungsschiene gleitet ein Gleitstück 32 des Deckels 22 entlang. Beim Öffnen des Deckels 22 wird zunächst die linke Seite des Deckels angehoben, so dass das Gleitstück 32 außer Eingriff gelangt. Nach dem Hochschwenken des Deckels kann dieser von dem Gehäuse 23 abgenommen werden und das Filterelement 24 läßt sich problemlos austauschen.

## Patentansprüche

1. Luftfilter, insbesondere für die Ansaugluft einer Brennkraftmaschine mit einem in einem Gehäuse (10) angeordneten Filtereinsatz (24), wobei das Gehäuse (10) einen Rohlufteinlaß (28) und einen Reinluftauslaß (29) aufweist und wobei das Gehäuse (10) durch einen Deckel (11) verschließbar ist, **dadurch gekennzeichnet, daß** an dem Gehäuse (10) eine bogenförmige Führungsschiene (13,14;17;30) vorgesehen ist und der Deckel (11) ein Gegenstück (15;32) aufweist, welches längs der Führungsschiene (13,14;17;30) entlang gleitet und eine definierte Lagepositionierung des Deckels (11) ermöglicht.

2. Luftfilter nach Anspruch 1, **dadurch gekennzeichnet, daß** die bogenförmige Führungsschiene (21) an dem Deckel (11) und das Gegenstück (20) an dem Gehäuse (10) angeordnet ist.

3. Luftfilter nach Anspruch 1 oder 2, **dadurch gekennzeichnet, daß** die bogenförmige Führungsschiene (13,14;17;21;32) Gleitflächen aufweist an welchen das Gegenstück (15;20;32) entlang gleitet.

4. Luftfilter, nach Anspruch 3, **dadurch gekennzeichnet, daß** das Gegenstück (15;20;32) zapfenartig gestaltet ist.

5. Luftfilter nach einem der vorherigen Ansprüche, **dadurch gekennzeichnet, daß** die zusätzliche Befestigung des Deckels (11) an dem Gehäuse (10) über Schraubverbindungen (16;26,27) oder Schnapp- oder Rastverbindungen erfolgt.

6. Luftfilter nach einem der vorherigen Ansprüche, **dadurch gekennzeichnet, daß** das Filterelement (24) ein zick-zack-förmig gefaltetes Plattenfilter ist, welches eine umlaufende Dichtung aufweist und diese umlaufende Dichtung gleichzeitig Deckel (11) und Gehäuse (10) im Verbindungsbereich (12) abdichtet.

7. Luftfilter nach einem der vorherigen Ansprüche **dadurch gekennzeichnet, dass** die bogenförmige Führungsschiene (13,14) an dem Gehäuse (10) zwei Führungsflächen (13,14) aufweist die parallel zueinander verlaufen, wobei der Krümmungsradiusmittelpunkt der Führungsflächen (13,14) im Bereich eines gedachten Scharnierdrehpunkts an einer gemeinsamen Seite von Deckel (11) und Gehäuse (10) sich befindet und das Gegenstück (15) an dem Deckel (11) passgenau zwischen den Führungsschienen (13,14) verschiebbar angeordnet ist.

8. Luftfilter nach Anspruch 1 **dadurch gekennzeichnet, dass** die bogenförmige Führungsschiene (13,14) an dem Gehäuse (10) eine bogenförmig verlaufende Bohrung ist und das Gegenstück (15) ein passgenau verlaufender bogenförmiger Stift ist, welcher in der Bohrung entlang gleitet.

## Claims

1. Air filter, more especially for the intake air of an internal combustion engine, said filter having a filter insert (24) which is disposed in a housing (10), wherein the housing (10) includes an unfiltered air inlet (28) and a filtered air outlet (29) and wherein the housing (10) is closable by means of a cover (11), **characterised in that** a curved guide rail (13, 14; 17; 30) is provided on the housing (10) and the cover (11) includes a counterpart (15; 32), which slides along the guide rail (13, 14; 17; 30) and enables a defined positioning of the cover (11).

2. Air filter according to claim 1, **characterised in that** the curved guide rail (21) is disposed on the cover (11) and the counterpart (20) is disposed on the housing (10).

3. Air filter according to daim 1 or 2, **characterised in that** the curved guide rail (13, 14; 17; 21; 32) includes sliding surfaces, along which the counterpart (15; 20; 32) slides.

4. Air filter according to claim 3, **characterised in that** the counterpart (15,20; 32) is pin-shaped.

5. Air filter according to one of the preceding claims, **characterised in that** the additional securing of the cover (11) to the housing (10) is effected via screw connections (16; 26, 27) or snap-type connections or locking connections.

6. Air filter according to one of the preceding claims, **characterised in that** the filter element (24) is a plate filter folded in a zigzag shape, which plate filter includes a circumferential seal and this circumferential seal at the same time seals cover (11) and housing (10) in the connecting region (12).

7. Air filter according to one of the preceding claims, **characterised in that** the curved guide rail (13, 14) on the housing (10) includes two guide surfaces (13, 14), which run parallel to one another, the central point of the radius of curvature of the guide surfaces (13, 14) being situated in the region of a pivotal centre of an imaginary hinge on a common side of cover (11) and housing (10) and the counterpart (15) is displaceably disposed on the cover (11) so as to fit in an accurate manner between the guide rails (13, 14).

8. Air filter according to claim 1, **characterised in that** the curved guide rail (13, 14) on the housing (10) is a bore which extends in an arcuate manner and the counterpart (15) is a curved pin, which extends so as to fit in an accurate manner and which slides along In the bore.

## Revendications

1. Filtre à air notamment pour l'air d'admission d'un moteur thermique comportant une garniture de filtre (24) installée dans un boîtier (10),
le boîtier (10) ayant une entrée d'air non filtré (28) et une sortie d'air filtré (29), et
le boîtier (10) se ferme avec un couvercle (11),
**caractérisé en ce que**
le boîtier (10) comporte un rail de guidage (13, 14, 17, 30) de forme courbe, et
le couvercle (11) comporte une pièce complémentaire (15, 32) qui glisse le long du rail de guidage (13, 14, 17, 30) et permet de placer le couvercle (11) dans une position définie.

2. Filtre à air selon la revendication 1,
**caractérisé en ce que**
le rail de guidage (21) de forme courbe est porté par le couvercle (11) et la pièce complémentaire (20) est portée par le boîtier (10).

3. Filtre à air selon la revendication 1 ou 2,
**caractérisé en ce que**
le rail de guidage (13, 14, 17, 21, 32) courbe comporte des surfaces de glissement le long desquelles glisse la pièce complémentaire (15, 20, 32).

4. Filtre à air selon la revendication 3,
**caractérisé en ce que**
la pièce complémentaire (15, 20, 32) est en forme de téton.

5. Filtre à air selon l'une des revendications précédentes,
**caractérisé en ce que**
la fixation complémentaire du couvercle (11) est faite sur le boîtier (10) par des liaisons à vis (16, 26, 27) ou des liaisons par enclipsage ou accrochage.

6. Filtre à air selon l'une des revendications précédentes,
**caractérisé en ce que**
l'élément de filtre (24) est un filtre à plaques replié en zigzag muni d'un joint périphérique et ce dernier assure en même temps l'étanchéité du couvercle (11) et du boîtier (10) dans la zone de liaison (12).

7. Filtre à air selon l'une des revendications précédentes,
**caractérisé en ce que**
le rail de guidage (13, 14) courbe présente au niveau du boîtier (10) deux surfaces de guidage (13, 14) parallèles, le centre du rayon de courbure des surfaces de guidage (13, 14) étant situé au niveau d'un point de rotation d'une charnière fictive sur un côté commun du couvercle (11) et du boîtier (10) et la pièce complémentaire (15) est installée de façon coulissante, de manière ajustée sur le couvercle (11) entre les rails de guidage (13, 14).

8. Filtre à air selon la revendication 1,
**caractérisé en ce que**
le rail de guidage (13, 14) courbe du boîtier (10) est un perçage courbe et la pièce complémentaire (15) est une broche courbe ajustée glissant le long du perçage.
